# EUROPEAN PATENT SPECIFICATION

(11) **EP 1 201 530 B1**
(45) Date of publication and mention of the grant of the patent: **04.06.2003**
(21) Application number: 00945964.5
(22) Date of filing: 21.07.2000
(51) Int. Cl.: B62D 21/15

(54) **IMPROVED SYSTEM FOR ABSORBING IMPACTS IN MOTOR VEHICLES**
VERBESSERTES SYSTEM ZUM ABSORBIEREN VON STÖSSEN IN KRAFTFAHRZEUGEN
SYSTEME AMELIORE D'AMORTISSEMENT DE CHOCS DANS DES VEHICULES AUTOMOBILES

(30) Priority: 11.08.1999 ES 9901853
(43) Date of publication of application: 02.05.2002
(73) Proprietor: Taexpa, S.A., 50500 Tarazona (ES)
(72) Inventor: TARAZONA DE LA ASUNCION, Ramiro, E-50500 Tarazona (ES)
(74) Representative: Fernandez Candelas, Carlos
(86) International application number: PCT/ES00/00264
(87) International publication number: WO 01/012494

(56) References cited:
- EP-A- 0 566 840
- EP-A- 0 598 685
- WO-A-98/40262
- DE-A- 19 624 932
- US-A- 4 836 321
- US-A- 5 154 253

## Description

This patent refers to devices provided for absorbing, offsetting and sharing a part of the forces generated over different components of the vehicle when a moving automobile suffers a head-on impact whether against a static body or against another vehicle travelling in the opposite direction.

In either case, generally with greater intensity in the latter of the two mentioned because of the force of inertia consequent on the travelling speeds, vehicles undergo considerable crushing and deformations particularly at their fronts, affecting the integrity of their occupants in a very serious manner.

In an attempt to mitigate the fatal consequences of these collisions, automobile makers have been introducing habitats or reinforced areas into their cars that, in a suitable combination with other parts liable to preconceived deformations, enable the undesirable effects of impacts to be partially reduced.

Devices have been designed with the same intention, with the aim of offsetting or sharing out the forces caused by the collision over the whole vehicle's bodywork, particularly transmitting part of them to the rear end opposite to the collision's.

Such devices achieve the almost simultaneous deformation of the front and rear ends of the vehicle's bodywork and thus extend the amount of the time involved in the deceleration caused by the collision and enabling the deformed surfaces of the rear of the bodywork to also absorb a considerable part of the forces caused by the said collision.

With these pretensions, in the state-of-the-art we can quote patent DE 43 26 269 in which an automobile is described, fitted with a front body with a deformable structure followed by a rigid cell for passengers.

We may also quote patent DE 40 22 137 in which the vehicle's front deformable element is supplemented with a system for transmitting force towards the rear thereof, where a second force absorbing element has been fitted. This transmitting element works under compression such that when an impact occurs, the deformation determines that the passenger cell moves towards the car's rear.

In Spanish patent P 97000524 which discloses the features of the preamble of Claim 1, of the same applicant as this one, and in German patent DE 196 24 932, a second force absorption area is also included in the vehicle's rear, but such forces are transmitted via cables working under traction. Some element is therefore required which will change the direction of the impact force's action, such as a pulley or a lever. Patent DE 196 24 932 describes cables offering a peculiar elasticity whilst Spanish patent P 0700024 addresses totally rigid cables such that the system's performance is optimized and, therefore the greatest magnitude of energy possible is managed to be transmitted to the deformable element of the car's rear.

Starting from the current state-of-the-art, most particularly the anticipations of his own, previous invention mentioned, this patent's applicant, after continuous studies, calculations and experiments, has drawn the important conclusion that in order to offset and share out a part of the forces generated by a head-on collision to the vehicle's rear structure, it is important to maintain the cable system which reverses the impact force's direction of action, but it proves clearly fundamental to establish the axle sustaining the cable guiding pulley, installed on an element designed in itself as progressively deformable in such a way that, after the initial impact and through the effect of the consequent cable tension, deformation of the said support sustaining the pulley axle occurs and, therefore, the said pulley likewise moves towards the rear of the car.

By providing this deformable support, the acceleration peak generated after the impact is reduced preventing a large part of the energy being transmitted onto the vehicle's chassis through the interpositioning of this peculiar support, and, therefore, an increase in the collision's acceleration.

In consonance with the foregoing, the essentialness of the invention is characterized by comprising front impact receiving devices, advanced towards the bumper, formed by solid long members, suitably secured onto the car's bodywork, which members are articulated at their rear end by a cable transmitting the forces caused by the collision towards the deformable devices provided for force absorption also solidly fastened to the car's rear structure. The aforesaid articulation is performed by a cable between the front receiving devices and the rear absorption devices by a pulley advanced frontwise. Apart from producing a reversal in the direction of the action of the transmitted force coming from the impact, the pulley offers the important peculiarity of its carrying axle being established on a support designed with a deformable condition and structure by effect of the tension caused in the cable by the collision forces, with the aim of the pulley being suitably moved backwards, in coincidence with its specific functional phase.

In order to facilitate understanding of the invention, the attached drawings show an example of the practical execution thereof.

Figure 1 schematically represents the silhouette of an automobile which has the impact absorption system covered by the patent incorporated.

Figures 2, 3 and 4 also show us three successive views relating to the patent system's operating mode in a highly schematic way,

We can see in the drawings how the system is arranged, composed of the front receiving means 1, secured near the front bumper; of the rear deformable devices for force absorption 2, anchored to the vehicle at its rear; of the cable 3 which relates and articulates the receiving means 1 with the absorption means 2; of the pulley 4 which, apart from guiding the cable 3, reverses the direction of action of the impact generated force and, finally, of the key element to be considered in this system, made up of the support 5 of the axle of the pulley 4, which support is rigidly established on the vehicle's general structure and offers the important peculiarity of being designed with the faculty of being able to deform lengthwise to the stress of the tension exercised by cable 3, as a consequence of the impact originated forces, which causes a respective displacement of the said pulley 4 rearwards.

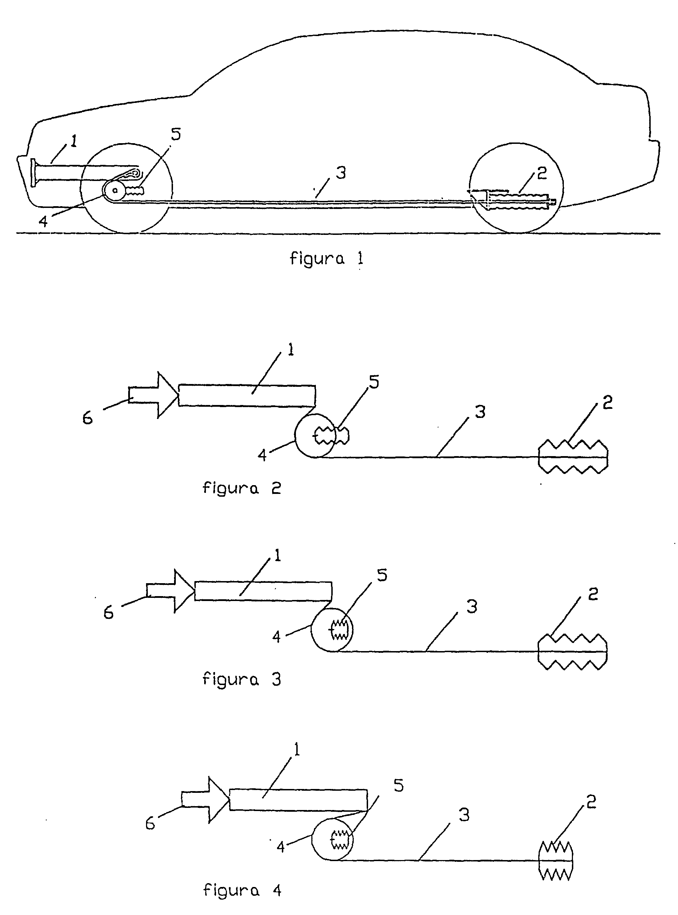

Figures 2, 3 and 4 show the diagrams respectively defined by the following situations:
- The moment immediately prior to an impact occurring with a body exterior to the vehicle, represented by arrow 6.
- Initial deformation caused in the system, specifically in support 5 of the axle of the pulley 4 as a result of the tension caused in cable 3 by the effects of the impact against body 6.
- The system's final situation, after its operation, in which the means for absorbing forces 2 have fulfilled their specific mission via their programmed deformation.

What has been expounded is a true reflection of the invention, which must be considered with a broad criterion. The possibility of establishing one or several planes of systems in one and the same vehicle is provided for, according to the specifications of each type of car, as well the possibility of effecting all those accessory modifications which do not alter or detract from the essentialness which is the subject of claim.

## Claims

1. An impact absorption system for automobile vehicles, which comprises front impact receiving members (1) secured to the car's bodywork and deformable devices (2) for absorbing forces, fastened onto the rear structure of the bodywork, both components are connected via a force transmitting cable (3) guided by a pulley (4) located in a front position of the vehicle, **characterized in that** the pulley carrying axle being fitted on a support (5) which extends in the length direction of the vehicle and which is deformable by the tension caused in the cable (3) as a result of the impact, said deformation moves the pulley, towards the rear of the vehicle.

## Patentansprüche

1. Ein System zur Aufpralldämpfung bei Automobilen, bestehend aus frontalen Aufpralldämpferteilen (1), die an dem Wagenaufbau befestigt sind und deformierbare Vorrichtungen (2) zur Kräfteabfangung, die auf dem Hinterteil des Wagenaufbaus befestigt sind und beide Komponente verbunden sind durch ein Kabel (3) zur Kräftübertragung, durch ein Laufrad (4) betrieben, das auf den Vorderteil des Fahrzeugs montiert ist, **dadurch gekennzeichnet, dass** die Trägerachse des Laufrads auf eine Halterung (5) angepasst ist, die sich in Längsrichtung des Fahrzeugs erstreckt und die deformiert wird durch die auf das Kabel (3) bei Aufprall einwirkende Spannkraft und somit diese Deformierung des Laufrad auf den hinteres Teil des Fahrzeugs verschiebt.

## Revendications

1. Un système d'absorption d'impacts destiné aux véhicules automobiles, comprenant des membres frontaux (1) récepteurs d'impacts, fixés à la carrosserie de la voiture, ainsi que des dispositifs déformables (2) destinés à absorber des forces, fixés à la structure arrière de la carrosserie; ces deux composants sont reliés par un câble (3) de transmission de force guidé par une poulie (4) située à l'avant du véhicule,qui se **caractérise par** ce que l'axe porteur de la poulie est emboîté sur un support (5) qui s'étend dans le sens de la longueur du véhicule et qui est déformable du fait de la tension transmise au câble (3) à la suite de l'impact, cette déformation étant transférée à la poulie vers la partie arrière du véhicule.
